(19) Europäisches Patentamt
European Patent Office
Office européen des brevets

(11) EP 1 185 570 B1

(12) FASCICULE DE BREVET EUROPEEN

(45) Date de publication et mention de la délivrance du brevet:
**13.04.2005 Bulletin 2005/15**

(21) Numéro de dépôt: **00938854.7**

(22) Date de dépôt: **26.05.2000**

(51) Int Cl.⁷: **C08F 293/00**, C08F 2/38

(86) Numéro de dépôt international:
**PCT/FR2000/001438**

(87) Numéro de publication internationale:
**WO 2000/075207 (14.12.2000 Gazette 2000/50)**

# (54) PROCEDE DE SYNTHESE DE POLYMERES PAR POLYMERISATION RADICALAIRE CONTROLEE A L'AIDE DE XANTHATES HALOGENES

VERFAHREN ZUR HERSTELLUNG VON POLYMEREN DURCH EINE KONTROLLIERTE RADIKALISCHPOLYMERISATION MIT HALOGENIERTEN XANTHATEN

SYNTHESIS METHOD FOR POLYMERS BY CONTROLLED RADICAL POLYMERISATION USING HALOGENATED XANTHATES

(84) Etats contractants désignés:
**AT BE CH CY DE DK ES FI FR GB GR IE IT LI LU MC NL PT SE**
Etats d'extension désignés:
**SI**

(30) Priorité: **04.06.1999 FR 9907096**

(43) Date de publication de la demande:
**13.03.2002 Bulletin 2002/11**

(73) Titulaire: **RHODIA CHIMIE**
**92512 Boulogne Billancourt Cedex (FR)**

(72) Inventeurs:
- **DESTARAC, Mathias**
  **F-75013 Paris (FR)**
- **CHARMOT, Dominique**
  **Los Gatos, CA 95032 (US)**
- **ZARD, Samir, Z.**
  **F-91190 Gif Sur Yvette (FR)**
- **FRANCK, Xavier**
  **F-94260 Fresnes en France (FR)**

(74) Mandataire: **Seugnet, Jean Louis**
**Rhodia Services,**
**Direction de la Propriété Industrielle,**
**40, rue de la Haie-Coq**
**93306 Aubervilliers Cedex (FR)**

(56) Documents cités:

| | |
|---|---|
| **WO-A-92/13903** | **WO-A-98/01478** |
| **WO-A-98/58974** | **WO-A-99/31144** |
| **FR-A- 2 773 161** | **US-A- 3 862 975** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne un nouveau procédé de polymérisation radicalaire "contrôlée" ou "vivante" donnant accès à des copolymères à blocs.

Les polymères à blocs sont habituellement préparés par polymérisation ionique. Ce type de polymérisation présente l'inconvénient de ne permettre la polymérisation. que de certains types de monomères apolaires, notamment le styrène et le butadiène. et de requérir un milieu réactionnel particulièrement pur et des températures souvent inférieures à l'ambiante de manière à minimiser les réactions parasites, d'où des contraintes de mise en oeuvre sévères.

La polymérisation radicalaire présente l'avantage d'être mise en oeuvre facilement sans que des conditions de pureté excessives soient respectées et à des températures égales ou supérieures à l'ambiante. Cependant, jusqu'à récemment, il n'existait pas de procédé de polymérisation radicalaire permettant d'obtenir des polymères à blocs.

Depuis, un nouveau procédé de polymérisation radicalaire s'est développé : il s'agit de la polymérisation radicalaire dite "contrôlée" ou "vivante". La polymérisation radicalaire contrôlée procède par croissance par propagation de macroradicaux. Ces macroradicaux, dotés d'un temps de vie très faible, se recombinent de façon irréversible par couplage ou dismutation: Lorsque la polymérisation se déroule en présence de plusieurs comonomères, la variation de composition du mélange est infiniment faible devant le temps de vie du macroradical de sorte que les chaînes présentent un enchaînement des unités monomères statistique et non un enchaînement séquencé.

Récemment des techniques de polymérisation radicalaire contrôlée ont été mises au point, dans lesquelles les extrémités de chaînes de polymères peuvent être réactivées sous forme de radical par scission homolytique de liaison (par exempte C-O, ou C-Halogéne).

La polymérisation radicalaire contrôlée présente donc les aspects distinctifs suivants :

1. le nombre de chaînes est fixe pendant toute la durée de la réaction,
2. les chaînes croissent toutes à la même vitesse, ce qui se traduit par :

- une augmentation linéaire des masses moléculaires avec la conversion,
- une distribution des masses resserrée,

3. la masse moléculaire moyenne est contrôfée par le rapport molaire monomère / précurseur de chaîne,
4. la possibilité de préparer des copolymères à blocs.

Le caractère contrôlé est d'autant plus marqué que la vitesse de réactivation des chaînes en radical est très grande devant la vitesse de croissance dès chaînes (propagation). Il existe des cas où ce n'est pas toujours vrai (i.e. la vitesse de réactivation des chaînes en radical est supérieure ou égale à la vitesse de propagation) et les conditions 1 et 2 ne sont pas observées, néanmoins, il est toujours possible de préparer des copolymères à blocs.

La publication WO 98/58974 décrit un procédé de polymérisation radicalaire vivante permettant d'accéder à des copolymères à blocs par un procédé sans irradiation UV, par mise en oeuvre de composés xanthates, dont la fonction est :

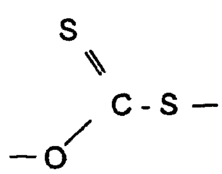

Cette polymérisation radicalaire permet de préparer des polymères à blocs en l'absence de source UV, à l'aide de tous types de monomères. Les polymères obtenus ne contiennent pas d'impuretés métalliques néfastes à leur utilisation. Ils sont fonctionnalisés en bout de chaîne et présentent un indice de polydispersité faible, inférieur à 2, voire à 1,5.

Le document WO99/31144 décrit la polymérisation de styrène en présence de O-pentafluorophenyl-S-benzyl xanthate (molécule 75, exemple 45).

Un but de la présente invention est de proposer un nouveau procédé de polymérisation à l'aide de nouveaux précurseurs de type xanthate.

Un autre but est de proposer un procédé de polymérisation mettant en oeuvre des précurseurs de type xanthate au cours duquel les masses molaires moyennes en nombre $M_n$ des polymères obtenus sont bien contrôlées, c'est-à-dire proches des valeurs théoriques $M_{n\ th}$, surtout en début de réaction de polymérisation.

Un autre but est de proposer un procédé de polymérisation mettant en oeuvre des précurseurs de type xanthate pour la synthèse de polymères et de copolymères à blocs présentant un indice de polydispersité ($M_w/M_n$) faible, c'est-à-dire proche de 1.

Dans ce but, l'invention concerne un procédé de préparation de polymères, caractérisé en ce qu'on met en contact :

- au moins un monomère éthyléniquement insaturé,
- au moins une source de radicaux libres, et
- au moins un composé (I) de formule générale (IA), (IB) ou (IC) :

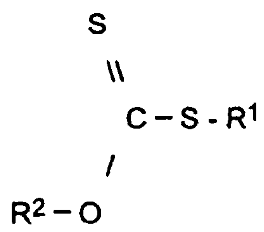

**(IA)**

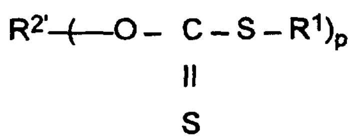

**(IB)**

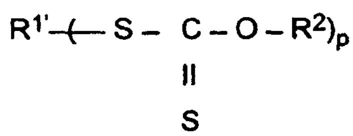

**(IC)**

dans lesquelles :

- **$R^2$** et **$R^{2'}$** représentent :

  . un groupe (i) alkyle, acyle, aryle, alcène ou alcyne, ou
  . un cycle (ii) carboné, saturé ou non, éventuellement aromatique, ou
  . un hétérocycle (iii), saturé ou non,

  ces groupes et cycles (i), (ii) et (iii) étant substitués par au moins un atome de fluor, de chlore et/ou de brome,
- **$R^1$** et **$R^{1'}$** représentent :

  . un groupe (i) alkyle, acyle, aryle, alcène ou alcyne éventuellement substitué, ou
  . un cycle (ii) carboné, saturé ou non, éventuellement substitué ou aromatique, ou
  . un hétérocycle (iii), saturé ou non, éventuellement substitué,
  ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
  R représentant un groupe alkyle ou aryle, ou

. une chaîne polymère,

- **p** est compris entre 2 et 10.
- le composé de formule générale IA étant différent d'un composé dans lequel $R^2$ est groupe pentafluorophenyl et $R^1$ est un groupe benzyl (le composé est différent du O-pentafluorophenyl-S-benzyl xanthate).

Le procédé selon l'invention consiste donc à mettre en contact une source de radicaux libres, un monomère éthyléniquement insaturé et un composé (I) de formule (IA), (IB) ou (IC).

Ce composé (I) porte une fonction xanthate. Selon la caractéristique essentielle de l'invention, la fonction xanthate porte un groupe $R^2$ ou $R^{2'}$ qui doit être substitué par au moins un atome de fluor, de chlore et/ou de brome. De préférence, $R^2$ et $R^{2'}$ sont substitués par au moins un atome de fluor, et encore plus: préférentiellement uniquement des atomes de fluor.

Selon une variante préférée, $R^2$ représente un groupe de formule : $-CH_2R'^5$, dans laquelle $R'^5$ est un groupe alkyle substitué par au moins un atome de fluor, de chlore et/ou de brome. Selon ce mode, les groupes $R^2$ préférés sont les suivants :

- $CH_2CF_3$,
- $CH_2CF_2CF_2CF_3$,
- $CH_2CH_2C_6F_{13}$,

Selon une autre variante préférée, $R^2$ représente le groupe $CH(CF_3)_2$.

De préférence, dans les formules (IA) et (IB), $R^1$ représente :

- un groupe de formule $CR^1R'^2R'^3$, dans laquelle:
  . $R'^1$, $R'^2$ et $R'^3$ représentent des groupes (i), (ii) ou (iii) tels que définis ci-dessus, ou
  . $R'^1 = R'^2 = H$ et $R'^3$ est un groupe aryle, alcène ou alcyne,
- ou un groupe de formule $-COR'^4$ dans lequel $R'^4$ représente un groupe (i), (ii) ou (iii) tel que définis ci-dessus.

Les résultats les plus intéressants ont été obtenus pour les composé (I) lorsque $R^1$ est un groupe choisi parmi :

- $CH(CH_3)(CO_2Et)$
- $CH(CH_3)(C_6H_5)$
- $CH(CO_2Et)_2$
- $C(CH_3)(CO_2Et)(S-C_6H_5)$
- $C(CH_3)_2(C_6H_5)$
- 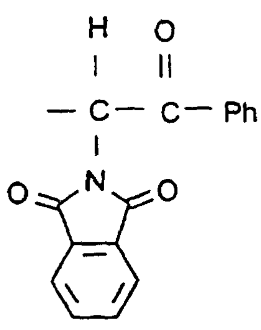

dans lesquelles Et représente un groupe éthyle et Ph représente un groupe phényle.

Les groupes $R^1$ et $R^{1'}$ peuvent également représenter une chaîne polymère issue d'une polymérisation radicalaire ou ionique ou issue d'une polycondensation. Pour les composés de formule (IC), on préfère ceux pour lesquels $R^{1'}$ est le groupe $-CH_2$-phényl-$CH_2$- ou le groupe $-CHCH_3CO_2CH_2CH_2CO_2CHCH_3$-.

Selon le mode préféré de l'invention, le procédé de polymérisation met en oeuvre un composé (I) de formule (IA). Les composés de formule (IA) préférés sont le a-(O-heptafluorobutylxanthyl)propionate d'éthyle ($R^1 = CHCH_3(CO_2Et)$, $R^2 = CH_2CF_2CF_2CF_3$), le a-(O-trifluoroéthylxanthyl)propionate d'éthyle ($R^1 = CHCH_3(CO_2Et)$, $R^2 = CH_2CF_3$) et le a-(O-tridécafluorooctanylxanthyl)propionate d'éthyle d'éthyle ($R^1 = CHCH_3(CO_2Et)$, $R^2 = CH_2CH_2C_6F_{13}$).

Les composés de formules (IA), (IB) et (IC) sont facilement accessibles. Ils peuvent notamment être obtenus

par réaction d'un alcool $R^2OH$ avec du disulfure de carbone $CS_2$ (en présence d'hydrure d'hydrogène par exemple) ce qui conduit au xanthate $R^2O(C=S)S^-Na^+$. Ensuite, on fait réagir ce xanthate avec un halogénure d'alkyle $R^1X$ (X = halogène), ce qui conduit au xanthate halogéné : $R^2O(C=S)\text{-}SR^1$.

Selon le procédé de l'invention, la source de radicaux libres est généralement un initiateur de polymérisation radicalaire. Cependant, pour certains monomères, tels que le styrène, un amorçage thermique suffit à générer des radicaux libres.

Dans le premier cas, l'initiateur de polymérisation radicalaire peut être choisi être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butylperoxyacétate, le t-butylperoxybenzoate, le t-butylperoxyoctoate, le t-butylperoxynéodécanoate, le t-butylperoxyisobutarate, le peroxyde de lauroyle, le t-amytperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis (4-acide pentanoïque), le 1,1'-azobis(cyclohexane-carbonitrile), le 2-(t-butylazo)2-cyanopropane, le 2,2'-azobis [2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure. de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
  - les mélanges de peroxyde d'hydrogène, d'alkyle. peresters, percarbonates et similaires et de n'importe lequel des sels de fer, de sels titaneux, formaldéhyde sulfoxylate de zinc ou formaldéhyde sulfoxytate de sodium, et des sucres réducteurs,
  - les persulfates, perborate ou perchlorate de métaux alcalins ou d'ammonium en association avec un bisulfite de métal alcalin, tel que le métabisulfite de sodium, et des sucres réducteurs,
  - les persulfate de métal alcalin en association avec un acide arylphosphinique, tel que l'acide benzène phosphonique et autres similaires, et des sucres réducteurs.

La quantité d'initiateur à utiliser est généralement déterminée de manière à ce que la quantité de radicaux générés soit d'au plus 20 % en mole par rapport à la quantité de composé (II), de préférence d'au plus 5 % en mole.

Selon le procédé de l'invention, les **monomères éthyléniquement insaturés** sont plus spécifiquement choisis parmi le styrène ou ses dérivés, le butadiène, le chloroprène, les esters (méth)acryliques, les esters vinyliques et les nitriles vinyliques.

Par esters (méth)acryliques, on désigne les esters de l'acide acrylique et de l'acide méthacrylique avec les alcools en $C_1$-$C_{12}$ hydrogénés ou fluorés, de préférence $C_1$-$C_8$. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.

Les nitriles vinyliques incluent plus particulièrement ceux ayant de 3 à 12 atomes de carbone, comme en particulier l'acrylonitrile et le méthacrylonitrile.

Il est à noter que le styrène peut être remplacé en totalité ou en partie par des dérivés tels que l'alphaméthylstyrène ou le vinyltoluène.

Les autres monomères éthyléniquement insaturés, utilisables seuls ou en mélanges, ou copolymérisables avec les monomères ci-dessus sont notamment :

- les esters vinyliques d'acide carboxylique comme l'acétate de vinyle, le Versatate® de vinyle, le propionate de vinyle,
- les halogénures de vinyle,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide. le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsutfonique. l'acide vinyl-benzène sulfonique, l'acide alpha-acrylamido méthylpropane-sulfonique, le 2-sulfoéthylène-méthacrylate,

- les amides de la vinylamine, notamment le vinylformamide ou le vinylacétamide,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth) acrylates d'aminoalkyle et les (méth)acrylamides d'aminoalkyle comme le diméthylaminoéthyl-acrylate ou méthacrylate, le ditertiobutylaminoéthyl-acrylate ou -méthacrylate, le diméthylamino méthyl-acrylamide ou -méthacrytamide. il est de même possible d'utiliser des monomères zwitterioniques comme par exemple l'acrylate de sulfopropyl (diméthyl)aminopropyle.

Pour la préparation des polyvinylamines, on utilise de préférence à titre de monomères éthyléniquement insaturés les amides de la vinylmamine, par exemple le vinylformamide ou le vinylacétamide. Puis, le polymère obtenu est hydrolysé à pH acide ou basique.

Pour la préparation des polyalcoolvinyliques, on utilise de préférence à titre de monomères éthyléniquement insaturés les esters vinyliques d'acide carboxylique, comme par exemple l'acétate de vinyle. Puis, le polymère obtenu est hydrolysé à pH acide ou basique.

Les types et quantités de monomères polymérisables mis en oeuvre selon la présente invention varient en fonction de l'application finale particulière à laquelle est destiné le polymère. Ces variations sont bien connues et peuvent être facilement déterminées par l'homme du métier.

La polymérisation peut être réalisée en masse, en solution ou en émulsion. De préférence, elle est mise en oeuvre en émulsion.

De préférence, le procédé est mis en oeuvre de manière semi-continue.

La température peut varier entre la température ambiante et 150°C selon la nature des monomères utilisés.

En général, au cours de la polymérisation, la teneur instantanée en polymère par rapport à la quantité instantanée en monomère et polymère est comprise entre 50 et 99 % en poids, de préférence entre 75 et 99 %, encore plus préférentiellement entre 90 et. 99 %. Cette teneur est maintenue, de manière connue, par contrôle de la température, de la vitesse d'addition des réactifs et éventuellement de l'initiateur de polymérisation.

Généralement, le procédé est mis en oeuvre en l'absence de source UV.

Le procédé selon l'invention présente l'avantage de permettre le contrôle des masses moléculaires moyenne en nombre $M_n$ des polymères. Ainsi, ces masses $M_n$ sont proches des valeurs théoriques $M_{n\ th}$, $M_{n\ th}$ étant exprimée par la formule suivante

$$M_{n\ th} = \frac{[M]_0}{[P]_0} \frac{X}{100} M_0$$

dans laquelle :

$[M]_0$ représente la concentration molaire initiale en monomère
$[P]_0$ représente le concentration initiale en composé précurseur
$X$ représente la conversion du monomère exprimée en pourcentage
$M_0$ représente la masse molaire du monomère (g/mol).

Selon la présente invention, le contrôle de Mn est particulièrement visible en début de polymérisation.

En outre, le procédé de polymérisation selon la présente invention conduit à des polymères présentant un faible indice de polydispersité (Ip = $M_w/m_n$ avec $M_w$ : masse moléculaire moyenne en poids), proche de 1.

L'invention concerne donc également les polymères susceptibles d'être obtenus par le procédé qui consiste à mettre en contact au moins un monomère éthyléniquement insaturé, au moins une source de radicaux libres et au moins un composé de formule (IA), (IB) ou (IC).

Généralement, ces polymères présentent un indice de polydispersité d'au plus 2, de préférence d'au plus 1,5.

L'invention concerne aussi un **procédé de préparation de polymères multiblocs** dans lequel on répète au moins une fois la mise en oeuvre du procédé de polymérisation précédemment décrit en utilisant:

- des monomères différents de la mise en oeuvre précédente, et
- à la place du composé (I) de formule (IA), (IB) ou (IC) le polymère issu de la mise en oeuvre précédente, dit polymère précurseur.

Le procédé complet de synthèse d'un polymère à blocs selon l'invention peut donc consister à :

(1) synthétiser un polymère précurseur par mise en contact d'un monomère éthyléniquement insaturé, d'une source

de radicaux libres et d'un composé de formule (IA), (IB) ou (IC),
(2) utiliser le polymère précurseur obtenu à l'étape (1) pour préparer un polymère dibloc par mise en contact de ce polymère précurseur avec un nouveau monomère éthyléniquement insaturé et une source de radicaux libres.

Cette étape (2) peut être répétée autant de fois que voulu avec de nouveaux monomères pour synthétiser de nouveaux blocs et obtenir un polymère multibloc.

Si on répète la mise en oeuvre une fois, on obtiendra un polymère tribloc, si on le répété une deuxième fois, on obtiendra un polymère "quadribloc", et ainsi de suite. Dé cette manière, à chaque nouvelle mise en oeuvre, le produit obtenu est un polymère à blocs présentant un bloc polymère supplémentaire.

Donc, pour la préparation de polymères multiblocs, le procédé consiste à répéter plusieurs fois la mise en oeuvre du procédé précédent sur le polymère à blocs issu de chaque mise en oeuvre précédente avec des monomères différents.

Les composés de formule (IB) et (IC) sont particulièrement intéressants car ils permettent de faire croître une chaîne polymère sur au moins deux sites actifs. Avec ce type de composés, il est possible d'économiser des étapes de polymérisation pour obtenir un copolymère à n blocs. Ainsi, si p vaut 2 dans la formule (IB) du (IC), le premier bloc est obtenu par polymérisation d'un monomère M1 en présence du composé de formule (IB) ou (IC). Ce premier bloc peut ensuite croître à chacune de ses extrémités par polymérisation d'un deuxième monomère M2. Un copolymère tribloc est obtenu, ce polymère tribloc peut, lui-même, croître à chacune de ses extrémités par polymérisation d'un troisième monomère M3. Ainsi, un copolymère "pentabloc" est obtenu en seulement trois étapes. Si p est supérieur à 2, le procédé permet d'obtenir des homopolymères ou des copolymères à blocs dont la structure est "multi-bras" ou hyperbranchée.

Selon ce procédé de préparation de polymères multiblocs, lorsque l'on souhaite obtenir des polymères à blocs homogènes et non à gradient de composition, et si toutes les polymérisations successives sont réalisées dans le même réacteur, il est essentiel que tous les monomères utilisés lors d'une étape aient été consommés avant que la polymérisation de l'étape suivante ne commence, donc avant que les nouveaux monomères ne soient introduits.

Comme pour le procédé de polymérisation de polymère monobloc, ce procédé de polymérisation de polymères à blocs présente l'avantage de conduire à des polymères à blocs présentant un indice de polydispersité faible. Il permet également de contrôler la masse moléculaire des polymères à blocs.

L'invention concerne donc les polymères à blocs susceptibles d'être obtenus par le procédé précédent.

Généralement, ces polymères à blocs présentent un indice de polydispersité d'au plus 2, de préférence d'au plus 1,5.

L'invention concerne notamment les polymères à blocs qui présentent au moins deux blocs polymères choisis parmi les associations suivantes :

- polystyrène/polyacrylate de méthyle
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate de tertiobutyle/polyacétate de vinyle.

Lors de la mise en oeuvre des composés de formule (IA), les polymères à blocs obtenus présentent une structure du type :

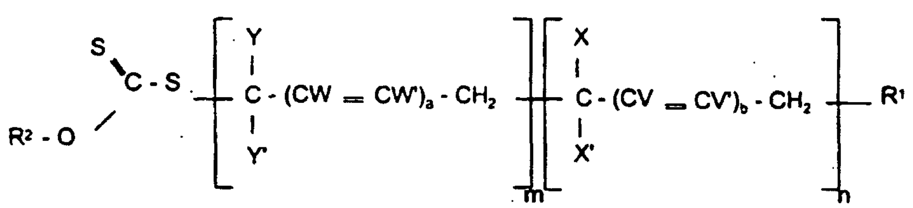 (IIIA)

dans laquelle :

- $R^2$, $R^1$ ont la même signification que précédemment,
- V, V', W et W, identiques ou différents, représentent : H, un groupe alkyle ou un halogène,
- X, X', Y et Y', identiques ou différents, représentent H, un halogène ou un groupe $R^3$, $OR^3$, $O_2COR^3$, NHCOH,

OH, $NH_2$, $NHR^3$, $N(R^3)_2$, $(R^3)_2N^+O^-$, $NHCOR^3$, $CO_2H$, $CO_2R^3$, CN, $CONH_2$, $CONHR^3$ ou $CONR^3{}_2$, dans lesquels $R^3$ est choisi parmi les groupes alkyle, aryle, aralkyle, alkaryle, alcène ou organosilyle, éventuellement perfluorés et éventuellement substitués par un ou plusieurs groupes carboxyle, époxy, hydroxyle, alkoxy, amino, halogène ou sulfonique,

- a et b, identiques ou différents, valent 0 ou 1,
- m et n, identiques ou différents, sont supérieurs ou égaux à 1, et lorsque l'un ou l'autre est supérieur à 1, les motifs unitaires répétitifs sont identiques ou différents.

Ces polymères à blocs sont issus de la mise en contact :

- d'un monomère éthyléniquement insaturé de formule : CYY' (= CW - CW')$_b$ = $CH_2$,
- d'un polymère précurseur de formule générale (IIA) :

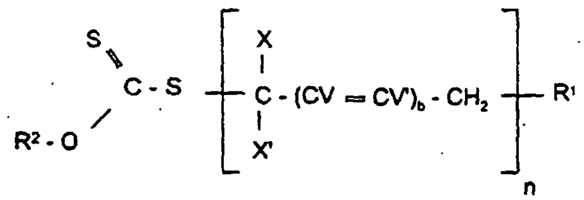

(IIA)

- d'une source de radicaux libres.

Le polymère (IIA) est issu de la mise en contact d'un monomère éthyléniquement insaturé de formule: CXX" (= CV - CV')$_a$ = $CH_2$, d'un composé (I) de formule générale (IA) et d'une source de radicaux libres.

De préférence, dans la formule (IIA), n est supérieur ou égal à 6.

Les composés (IIA) particulièrement préférés sont les homopolymères de styrène (Y'= H, Y = $C_6H_5$, b = 0), d'acrylate de méthyle (Y'= H, Y = COOMe, b = 0), d'acrylate d'éthyle (Y'= H, Y = COOEt, b = 0),d'acrylate de butyle (Y'= H, Y = COOBu, b = 0), d'acrylate de tertiobutyle (Y'=H, Y = COOtBu, b = 0). d'acétate de vinyle (Y'= H, Y = OCOMe, b = 0), d'acide acrylique (Y'= H, Y= COOH, b = 0), et pour lesquels :

- $R^1$ = $CHCH_3(CO_2Et)$, $CH(CO_2Et)_2$ ou $C(CH_3)_2(C_6H_5)$, et
- $R^2$ = - $CH_2CF_3$, - $CH_2CF_2CF_2CF_3$ ou $CH_2CH_2C_6F_{13}$.

Les exemples suivants illustrent l'invention sans toutefois en limiter la portée.

La figure 1 donne les courbes d'évolution de $M_n$ et $M_w/M_n$ en fonction du taux de conversion du monomère acrylate d'éthyle par mise en oeuvre d'un xanthate selon l'invention et d'un xanthate selon l'art antérieur.

La figure 2 donne les courbes d'évolution de $M_n$ et $M_w/M_n$ en fonction du taux de conversion du monomère styrène par mise en oeuvre d'un xanthate selon l'invention et d'un xanthate selon l'art antérieur.

## EXEMPLES

### EXEMPLES 1 - SYNTHESES DE PRECURSEURS DE FORMULE (IA) (xanthates)

#### Exemple 1.1 - Synthèse du précurseur a-(O-heptafluorobutylxanthyl)propionate d'éthyle (A)

Dans un ballon en verre, on met 1g (5 mmol) d'heptafluorobutanol en solution dans 10 ml de DMF (N,N-diméthylformamide). On ajoute 0,6 ml (10 mmol) de $CS_2$. La solution est refroidie à 0°C puis on ajoute 0,24 g (5 mmol) de NaH. Après 1 heure d'agitation à 0°C, on ajoute 0,6 ml (4,5 mmol) d'éthyl 2-bromopropionate. La solution est agitée 1 heure à 0°C puis 2 heures à température ambiante avant d'être diluée par de l'éther éthylique. Elle est ensuite lavée à l'eau, puis à la saumure. La phase organique est concentrée sous vide, puis le brut réactionnel est purifié par colonne (9/1 : heptane / acétate d'éthyle). On isole 1,5 g (88 % de rendement) de produit A.

#### Exemple 1.2 - Synthèse du précurseur a-(O-trifluoroéthylxanthyl)propionate d'éthyle (B)

Dans un ballon en verre, on met 2 g (20 mmol) de trifluoroéthanol en solution dans 40 ml de DMF. On ajoute

2,4 ml (40 mmol) de $CS_2$. La solution est refroidie à 0°C, puis on ajoute 0,96 g (20 mmol) de NaH. Après 1 heure d'agitation à 0°C, on ajoute 2,34. ml (18 mmol) d'éthyl 2-bromopropionate. La solution est agitée 1 heure à 0°C, puis deux heures à température ambiante avant d'être diluée par de l'éther éthylique. Elle est ensuite lavée à l'eau, puis à la saumure. La phase organique est concentrée sous vide, puis le brut réactionnel est purifié par colonne (9/1.: heptane / acétate d'éthyle). On isole 3,4 g (69 % de rendement) de xanthate B.

**Exemple 1.3 - Synthèse du précurseur a-(O-tridécafluoro-octanylxanthyl) propionate d'éthyle (C)**

Dans un ballon en verre, on met 1,1 ml (5 mmol) de tridécafluorooctanol en solution dans 10 ml de DMF. On ajoute 0,6 ml (10 mmol) de $CS_2$. La solution est refroidie à 0°C puis 0,24 g (5 mmol) de NaH sont ajoutés. Après 1 heure d'agitation à 0°C, on ajoute 0,6 ml (4,5 mmol) d'éthyl 2-bromopropionate. La solution est agitée 1 heure à 0°C, puis 2 heures à température ambiante avant d'être diluée par de l'éther éthylique. Elle est ensuite lavée à l'eau, puis à la saumure. La phase organique est concentrée sous vide puis le brut réactionnel est purifié par colonne (9 /1: heptane / acétate d'éthyle). On isole 2,27 g (93 % de rendement) de xanthate C.

**EXEMPLES 2 - SYNTHESES DE POLYMERES (homopolymères)**

Ces exemples démontrent que la polymérisation radicalaire est contrôlée grâce à l'utilisation des xanthates selon l'invention.

Dans les exemples ci-dessous les polymères sont analysés en GPC avec le THF comme solvant d'élution ; $M_n$ est exprimée en équivalents polystyrène (g/mol).

**Exemple 2.1 - Homopolymérisation de l'acrylate d'éthyle en présence de B.**

On introduit dans un ballon en verre :

- 0,02 mmol d'azo-bis isobutyronitrile (AIBN) (3,38 mg),
- 54,9 mmol d'acrylate d'éthyle (5,5 g)
- 0,69 mmol de xanthate B (0,19 g)
- 5,97 $cm^3$ de toluène (5,17 g).

La solution obtenue est divisée en huit fractions réparties dans autant de tubes de Carius. Les tubes sont connectés à une rampe à vide, plongés dans l'azote liquide, puis on effectue trois cycles "congélation / vide / retour à l'ambiante" sur le contenu de chaque tube afin de les dégazer. Ils sont ensuite scellés sous vide. Après retour à l'ambiante, ils sont immergés dans un bain d'huile préchauffé à 80°C. L'un après l'autre, à des intervalles de temps (t) réguliers, ils sont sortis du bain d'huile et plongés dans l'azote liquide pour stopper la polymérisation et être analysés.

Le polymère est récupéré par ouverture du tube puis évaporation des traces de monomère résiduel.

On contrôle également :

- la conversion en précurseur par GPC (détection UV) et
- la conversion en monomère par gravimétrie.

Les résultats obtenus sont reportés en tableau 1 et figure 1.

Tableau 1

| Essai | t (min) | Conversion en monomère (%) | Conversion en précurseur (%) | $M_n$ | $M_w/M_n$ |
|---|---|---|---|---|---|
| **1** | 5 | <1 | | | |
| **2** | 15 | 4,2 | 36,3 | 2790 | 1,98 |
| **3** | 20 | 11 | 72,6 | 2940 | 2,00 |
| **4** | 25 | 25,7 | 73,4 | 3600 | 1,81 |
| **5** | 35 | 46,4 | 92 | 5115 | 1,58 |
| **6** | 53 | 84,1 | > 99 | 6756 | 1,52 |
| **7** | 80 | 89,9 | > 99 | 7716 | 1,43 |

Tableau 1 (suite)

| Essai | t (min) | Conversion en monomère (%) | Conversion en précurseur (%) | $M_n$ | $M_w/M_n$ |
|---|---|---|---|---|---|
| **8** | 140 | 91,8 | > 99 | 7946 | 1.42 |

Sur la figure 1, on compare les résultats obtenus avec le xanthate B à ceux obtenus avec du a-(O-éthylxanthyl) propionate d'éthyle ($R^2$ = éthyle), dans les mêmes conditions de concentrations molaires initiales et de température.

On constate qu'avec le xanthate B, la valeur de $M_n$ est mieux contrôlée : elle se rapproche de la valeur théorique ($M_{n\ th}$) dès le début de la polymérisation, contrairement au cas de la polymérisation avec le xanthate de l'art antérieur (a-(O-éthylxanthyl)propionate d'éthyle).

En outre, la valeur de $M_w/M_n$ tend rapidement vers 1 dans le cas du xanthate B, tandis que cette valeur reste stabilisée à plus de 1,6 pour le xanthate de l'art antérieur (a-(O-éthylxanthyl)propionate d'éthyle).

**Exemple 2.2 - Homopolymérisation de l'acrylate d'éthyle en présence de C.**

On prélève 1,08 ml d'une solution composée de 3,9 mg d'AIBN et de 7,5 ml d'acrylate d'éthyle. Cette fraction est ajoutée à 68,1 mg (0,126 mmol) de xanthate C placé dans un tube de Carius. Le tube est dégazé, puis scellé sous vide. La réaction a lieu pendant 21 h à 80°C.

La conversion en monomère est de 95 %.

La conversion en xanthate est de 100 %.

$M_n$ vaut 9400 g/mol.

$M_w/M_n$ vaut 1,48.

On constate qu'à taux de conversion élevé, la valeur de l'indice de polymérisation est faible et proche de 1.

**Exemple 2.3 - Homopolymérisation de l'acrylate d'éthyle en présence de A.**

On introduit dans un ballon en verre :

- 0.,01 mmol d'AIBN (1,69 mg),
- 31,9 mmol d'acrylate d'éthyle (3,192 g),
- 0,4 mmol de xanthate A (0, 15 g),
- 3,47 $cm^3$ de toluène (3 g).

De manière analogue à l'exemple 2.1, cinq tubes sont préparés et scellés sous vide. Les analyses sont réalisées de la même manière.

Les résultats sont reportés dans le tableau 2.

Tableau 2

| Essai | t (min) | Conversion en monomère (%) | Conversion en précurseur (%) | $M_n$ | $M_w/M_n$ |
|---|---|---|---|---|---|
| **1** | 15 | <1 | | | |
| **2** | 25 | 11,3 | 42,6 | 3603 | 1,76 |
| **3** | 35 | 24,7 | 70.4 | 4590 | 1,62 |
| **4** | 45 | 45,3 | 93.9 | 5934 | 1,55 |
| **5** | 90 | 81,8 | > 99 | 8380 | 1,41 |

On constate que les valeurs de l'indice de polydispersité est proche de 1,4 à conversion élevée.

**Exemple 2.4. - Homopolymérisation du styrène en présence de B.**

On introduit dans un ballon en verre :

- 3,016 g (3,32 ml, 28,9 mmol) de styrène
- 0,1 g (0,36 mmol) de xanthate B

- 3,32 ml de toluène.

Le mélange obtenu est séparé en 5 fractions réparties en autant de tubes de Carius. Après avoir été dégazés puis scellés sous vide, ils sont placés dans une étuve maintenue à 110°C. A intervalles de temps réguliers, les tubes sont retirés, refroidis puis ouverts. Les résultats obtenus sont regroupés dans le tableau 3 et sur la figure 2.

Tableau 3

| Essai | T (heures) | Conversion en monomère (%) | $M_n$ | $M_w/M_n$ |
|---|---|---|---|---|
| **1** | 2 | 7,8 | 2660 | 1,93 |
| **2** | 5,33 | 16 | 2940 | 1,89 |
| **3** | 16,25 | 28 | 3520 | 1,77 |
| **4** | 25,5 | 41,1 | 3830 | 1,76 |
| **5** | 89,5 | 65,8 | 5600 | 1,57 |

Sur la figure 2, on compare les résultats obtenus avec le xanthate B à ceux obtenus avec du a-(O-éthylxanthyl) propionate d'éthyle ($R^2$ = éthyle), dans les mêmes conditions de concentrations molaires initiales et de température.

On constate qu'avec le xanthate B. la valeur de $M_n$ est mieux contrôlée : elle se rapproche de la valeur théorique ($M_{n\ th}$) dès le début de la polymérisation, contrairement au cas de la polymérisation avec le xanthate de l'art antérieur (a-(O-éthylxanthyl)propionate d'éthyle).

En outre, la valeur de $M_w/M_n$ tend rapidement vers 1 dans le cas du xanthate B, tandis que cette valeur reste stabilisée à environ 2 pour le xanthate de l'art antérieur (a-(O-éthylxanthyl)propionate d'éthyle).

**Exemple 2.5 - Homopolymérisation de l'acétate de vinyle en présence de B.**

On introduit dans un tube en verre :

- 4,73 g (55 mmol) d'acétate de vinyle
- 0,19 g (0,69 mmol)de xanthate B
- 3,38 mg (0,02 mmol) d'AIBN.

Le tube est dégazé, puis scellé sous vide. Après 8h20 à 60°C, le tube est ouvert et le polymère est analysé :

- conversion en monomère : 11,3 %
- $M_n$= 740 g/mol
- $M_w/M_n$ = 1,19.

On constate que, dans les mêmes conditions de température et de concentration initiale, le xanthate de l'art antérieur (a-(O-éthylxanthyl)propionate d'éthyle) permet de contrôler $M_n$ (< 1000g/mol) à environ 10 % de conversion en monomère, cependant la valeur de $Mw/M_n$ reste voisine de 1,5.

**Exemple 2.6 - Homopolymérisation du styrène en présence de B.**

On introduit dans un tube en verre :

- 0,81 g (0,9 ml, 7,8 mmol) de styrène
- 27,7 mg (0,1 mmol) de xanthate B
- 0,93 ml de toluène

Le tube est dégazé, puis scellé sous vide. Après 114 heures à 120°C, le tube est ouvert et le polymère est caractérisé. Les résultats sont les suivants :

- conversion en monomère : 84,4 %
- $M_n$ = 7500 g/mol
- $M_w/Mn$ = 1,57

On constate qu'à taux de conversion élevé, la valeur de l'indice de polymérisation est faible et proche de 1.

**Exemple 2.7 - Homopolymérisation de l'acrylate d'éthyle en présence de B.**

On introduit dans un tube en verre:

- 1,61 g (1,75 ml, 16,1 mmol) d'acrylate d'éthyle
- 52,6 mg (0,19 mmol) de xanthate B
- 1,84 ml de toluène

Le tube est dégazé, puis scellé sous vide. Après 20 h à 80°C, le tube est ouvert et le polymère est caractérisé. Les résultats sont les suivants :

- conversion en monomère : 88.1 %
- $M_n$ = 8200 g/mol
- $M_w/M_n$ = 1,69

On constate qu'à taux de conversion élevé, la valeur de l'indice de polymérisation est faible et proche de 1.

**EXEMPLES 3 - SYNTHESES DES POLYMERES A BLOCS**

**Exemple 3.1 - Synthèse d'un copolymère dibloc polystyrène-b-polyacrylate d'éthyle**

On introduit dans un tube en verre:

- 0,25 g du polystyrène décrit dans l'exemple 2.6
- 0,3 g (3 mmol) d'acrylate d'éthyle
- 0,15 mg ($9.10^{-7}$ mol) d'AIBN
- 0,57 ml de toluène

Le tube est dégazé, puis scellé sous vide. Après 20h à 120°C, le tube est ouvert et le copolymère est caractérisé. Les résultats sont les suivants :

- conversion en monomère : 40,1 %
- $M_n$ = 12400 g/mol
- $M_w/M_n$ = 1,45

On constate que, dans les mêmes conditions de température et de concentration initiale, le xanthate de l'art antérieur (a-(O-éthylxanthyl)propionate d'éthyle) conduit à un copolymère dibloc présentent un indice de polydispersité de 1,8.

**Exemple 3.2 - Synthèse d'un copolymère dibloc polystyrène-b-polyacrylate de butyle**

On introduit dans un tube en verre :

- 0,175 g du polystyrène décrit dans l'exemple 2.6
- 0,27 g (2,12 mmol) d'acrylate de butyle
- 0,15 mg ($9.10^{-7}$ mol) d'AIBN
- 0,57 ml de toluéne

Le tube est dégazé, puis scellé sous vide. Après 20h à 120°C. le tube est ouvert et le copolymère est caractérisé. Les résultats sont les suivants :

- conversion en monomère : 42,4 %
- $M_n$ = 12100 g/mol
- $M_w/M_n$ = 1,66

**Exemple 3.3 - Synthèse d'un copolymère dibloc polyacrylate d'éthyle-b-polyacétate de vinyle**

On introduit dans un tube en verre :

- 0,2 g de polyacrylate d'éthyle décrit dans l'exemple 2.7
- 0,2 g (2,3 mmol) d'acétate de vinyle
- 0,44 mg ($3{,}6.10^{-6}$ mol) d'AIBN
- 0,32 g de méthyléthylcétone

Le tube est dégazé, puis scellé sous vide. Après 20h à 80°C, le tube est ouvert et le polymère est caractérisé. Les résultats sont les suivants :

- conversion en monomère : 71 %
- $M_n$ = 13300 g/mol
- $M_w/M_n$ = 1,66

**Exemple 3.4 Synthèse d'un copolymère dibloc polystyrène-b-polyacétate de vinyle**

On introduit dans un tube en verre:

- 0,2 g de polystyrène décrit dans l'exemple 2.6
- 0,2 g (2,3 mmol) d'acétate de vinyle
- 0,44 mg ($3{,}6.10^{-6}$ mol) d'AIBN
- 0,32 ml de toluène

Le tube est dégazé, puis scellé sous vide. Après 20h à 80°C, le tube est ouvert et le polymère est caractérisé. Les résultats sont les suivants :

- conversion en monomère : 74 %
- $M_n$ = 12800 g/mol
- $M_w/M_n$ = 1,61

**Revendications**

1. Procédé de préparation de polymères, **caractérisé en ce qu'**on met en contact :

   - au moins un monomère éthyléniquement insaturé,
   - au moins une source de radicaux libres, et
   - au moins un composé de formule générale (IA), (IB) ou (IC) :

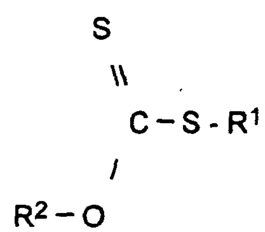

(IA)

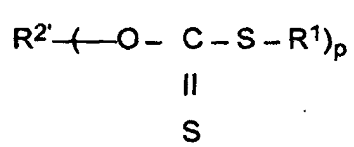

(IB)

$$R^{1'}\!-\!\!\left(-S-\underset{\underset{\displaystyle S}{\|}}{C}-O-R^{2}\right)_{p} \qquad \text{(IC)}$$

dans lesquelles:

- **$R^2$** et **$R^{2'}$** représentent :

  . un groupe (i) alkyle, acyle, aryle, alcène ou alcyne, ou
  . un cycle (ii) carboné, saturé ou non, éventuellement aromatique, ou
  . un hétérocycle (iii), saturé ou non,

  ces groupes et cycles (i), (ii) et (iii) étant substitués par au moins un atome de fluor, de chlore et/ou de brome,
- **$R^1$** et **$R^{1'}$** représentent :

  . un groupe (i) alkyle, acyle, aryle, alcène ou alcyne éventuellement substitué, ou
  . un cycle (ii) carboné, saturé ou non, éventuellement substitué ou aromatique, ou
  . un hétérocycle (iii), saturé ou non, éventuellement substitué,
  ces groupes et cycles (i), (ii) et (iii) pouvant être substitués par des groupes phényles substitués, des groupes aromatiques substitués ou des groupes : alkoxycarbonyle ou aryloxycarbonyle (-COOR), carboxy (-COOH), acyloxy (-$O_2CR$), carbamoyle (-$CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-$NR_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires),
  R représentant un groupe alkyle ou aryle, ou
  . une chaîne polymère,

- **p** est compris entre 2 et 10.
- le composé de formule générale IA étant différent d'un composé dans lequel $R^2$ est groupe pentafluorophenyl et $R^1$ est un groupe benzyl.

2. Procédé selon la revendication précédente, **caractérisé en ce que** $R^2$ et $R^{2'}$ sont substitués par au moins un atome de fluor.

3. Procédé selon l'une quelconque des revendications précédentes, **caractérisé en ce que** $R^2$ représente un groupe de formule : -$CH_2R'^5$, dans laquelle $R'^5$ représente un groupe alkyle substitué par au moins un atome de fluor, de chlore et/ou de brome.

4. Procédé selon la revendication précédente, **caractérisé en ce** $R^2$ est choisi parmi les groupes suivants :

   - $CH_2CF_3$,
   - $CH_2CF_2CF_2CF_3$,
   - $CH_2CH_2C_6F_{13}$.

5. Procédé selon l'une quelconque des revendications précédentes, **caractérisé en ce que** $R^1$ représente :

   - un groupe de formule $CR'^1R'^2R'^3$, dans laquelle:

     . $R'^1$, $R'^2$ et $R'^3$ représentent des groupes (i), (ii) ou (iii) tels que définis ci-dessus, ou
     . $R'^1 = R'^2 = H$ et $R'^3$ est un groupe aryle, alcène ou alcyne,

   - ou un groupe -$COR'^4$ dans lequel $R'^4$ représente un groupe (i), (ii) ou (iii).

**6.** Procédé selon la revendication précédente, **caractérisé en ce que** $R^1$ est choisi parmi les groupes :

- $CH(CH_3)(CO_2Et)$
- $CH(CH_3)(C_6H_5)$
- $CH(CO_2Et)_2$
- $C(CH_3)(CO_2Et)(S\text{-}C_6H_5)$
- $C(CH_3)_2(C_6H_5)$
- 

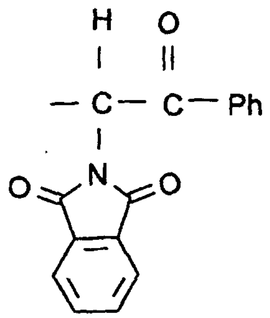

**7.** Procédé selon l'une quelconque des revendications précédentes, **caractérisé en ce que** la polymérisation met en oeuvre un composé de formule (IA).

**8.** Procédé selon la revendication précédente, **caractérisé en ce que** le composé de formule (IA) est choisi parmi le a-(O-heptafluorobutylxanthyl)propionate d'éthyle ($R^1 = CHCH_3(CO_2Et)$, $R^2 = CH_2CF_2CF_2CF_3$), le a-(O-trifluoroéthylxanthyl)propionate d'éthyle ($R^1 = CHCH_3(CO_2Et)$, $R^2 = CH_2CF_3$) et le a-(O-tridécafluorooctanylxanthyl) propionate d'éthyle ($R^1 = CHCH_3(CO_2Et)$, $R^2 = CH_2CH_2C_6F_{13}$).

**9.** Procédé selon l'une quelconque des revendications précédentes, **caractérisé en ce que** le monomère éthyléniquement insaturé est choisi parmi : le styrène ou ses dérivés, le butadiène, le chloroprène, les esters (méth) acryliques et les nitriles vinyliques.

**10.** Procédé selon l'une quelconque des revendications précédentes, **caractérisé en ce que** le monomère éthyléniquement insaturé est choisi parmi les esters vinyliques d'acide carboxylique.

**11.** Procédé selon l'une quelconque des revendications précédentes, **caractérisé en ce que** le monomère éthyléniquement insaturé est choisi parmi l'acétate de vinyle, et le propionate de vinyle.

**12.** Polymère susceptible d'être obtenu par le procédé qui consiste à mettre en contact un monomère éthyléniquement insaturé, une source de radicaux libres et un composé de formule (IA), (IB) ou (IC).

**13.** Polymère selon la revendication précédente, **caractérisé en ce qu'**il présente un indice de polydispersité d'au plus 2, de préférence d'au plus 1,5.

**14.** Procédé de préparation de polymères multiblocs, **caractérisé en ce qu'**on répète au moins une fois la mise en oeuvre du procédé selon l'une des revendications 1 à 10 en utilisant :

- des monomères différents de la mise en oeuvre précédente, et
- à la place du composé précurseur de formule (IA), (IB) ou (IC), le polymère à blocs issu de la mise en oeuvre précédente.

**15.** Polymère à blocs susceptible d'être obtenu par le procédé selon la revendication précédente.

**16.** Polymère à blocs selon la revendication précédente, **caractérisé en ce qu'**il présente un indice de polydispersité d'au plus 2, de préférence d'au plus 1,5..

**17.** Polymère à blocs selon la revendication 12 ou 13, **caractérisé en ce qu'**il présente au moins deux blocs polymères choisis parmi les associations suivantes :

- polystyrène/polyacrylate de méthyle
- polystyrène/polyacrylate d'éthyle,
- polystyrène/polyacrylate de tertiobutyle,
- polyacrylate d'éthyle/polyacétate de vinyle,
- polyacrylate de butyle/polyacétate de vinyle
- polyacrylate de tertiobutylelpolyacétate de vinyle.

**Patentansprüche**

**1.** Verfahren zur Herstellung von Polymeren, **dadurch gekennzeichnet, dass** man in Kontakt bringt:

- wenigstens ein ethylenisch ungesättigtes Monomer,
- wenigstens eine Quelle von freien Radikalen, und
- wenigstens eine Verbindung der allgemeinen Formel (IA), (IB) oder (IC):

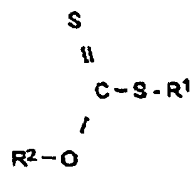

(IA)

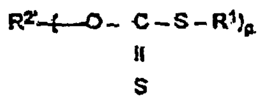

(IB)

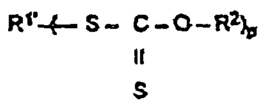

(IC)

in denen:

- **$R^2$** und **$R^{2'}$** darstellen:
  - eine Alkyl-, Acyl-, Aryl-, Alken- oder Alkingruppe (i), oder
  - einen Kohlenstoffring (ii), gesättigt oder nicht, gegebenenfalls aromatisch, oder
  - einen Heterozyklus (iii), gesättigt oder nicht,

  wobei diese Gruppen und Ringe (i), (ii) und (iii) substituiert sind durch wenigstens ein Fluoratom, Chloratom und/oder Bromatom,

- **$R^1$** und **$R^{1'}$** darstellen:
  - eine Alkyl-, Acyl-, Aryl-, Alken- oder Alkingruppe (i), gegebenenfalls substituiert, oder
  - einen Kohlenstoffring (ii), gesättigt oder nicht, gegebenenfalls substituiert oder aromatisch, oder
  - einen Heterozyklus (iii), gesättigt oder nicht, gegebenenfalls substituiert,

wobei die Gruppen und Ringe (i), (ii) und (iii) substituiert sein können durch substituierte Phenylgruppen, substituierte aromatische Gruppen oder Gruppen; Alkoxycarbonyl- oder Aryloxycarbonyl-(-COOR), Carboxy-(-COOH), Acyloxy- ($-O_2CR$), Carbamoyl- ($-CONR_2$), Cyano- (-CN), Alkylcarbonyl-, Alkylarylcarbonyl-, Arylcarbonyl-, Arylalkylcarbonyl-, Phtalimido-, Maleinimido-, Succinimido-, Amidino-, Guanimido-, Hydroxy- (-OH), Amino- ($NR_2$), Halogen-, Allyl-, Epoxy-, Alkoxy- (-OR), S-alkyl-, S-Arylgruppen, wobei die Gruppen einen hydrophilen oder ionischen Charakter aufweisen, wie die Alkalisalze der Karbonsäuren, die Alkalisalze der Sulfosäure, Polyalkylenoxidketten (POE, POP), kationische Substituenten (vierwertige Amoniumsalze),
wobei R eine Alkyl- oder Arylgruppe darstellt, oder

- eine Polymerkette,

- **p** zwischen 2 und 10 liegt.

- die Verbindung der allgemeinen Formel IA verschieden ist von einer Verbindung, in welcher $R^2$ eine Pentafluorphenylgruppe und $R^1$ eine Benzylgruppe ist.

**2.** Verfahren gemäß dem vorausgegangenen Anspruch, **dadurch gekennzeichnet, dass** $R^2$ und $R^{2'}$ durch wenigstens ein Fluoratom substituiert sind.

**3.** Verfahren gemäß irgend einem der vorausgegangenen Ansprüche, **dadurch gekennzeichnet, dass** $R^2$ eine Gruppe der Formel: $-CH_2R'^5$ darstellt, in welcher $R'^5$ eine Alkylgruppe darstellt, die durch wenigstens ein Fluoratom, Chloratom und/oder Bromatom substituiert ist.

**4.** Verfahren gemäß dem vorausgegangenen Anspruch, **dadurch gekennzeichnet, dass** $R^2$ aus den folgenden Gruppen gewählt wird:

- $CH_2CF_3$,
- $CH_2CF_2CF_2CF_3$,
- $CH_2CH_2C_6F_{13}$.

**5.** Verfahren gemäß irgend einem der vorausgegangenen Ansprüche, **dadurch gekennzeichnet, dass** $R^1$ darstellt:

- eine Gruppe der Formel $CR'^1R'^2R'^3$, in welcher:
  - $R'^1$, $R'^2$ und $R'^3$ Gruppen (i), (ii) oder (iii) darstellen, wie oben definiert, oder
  - $R'^1 = R'^2 = H$ sind und $R'^3$ eine Aryl-, Alken- oder Alkingruppe ist,
- oder eine Gruppe $-COR'^4$, in welcher $R'^4$ eine Gruppe (i), (ii) oder (iii) darstellt.

**6.** Verfahren gemäß dem vorausgegangenen Anspruch, **dadurch gekennzeichnet, dass** $R^1$ aus den folgenden Gruppen gewählt ist:

- $CH(CH_3)(CO_2Et)$
- $CH(CH_3)(C_6H_5)$
- $CH(CO_2Et)_2$
- $C(CH_3)(CO_2Et)(S-C_6H_5)$
- $C(CH_3)_2(C_6H_5)$

-

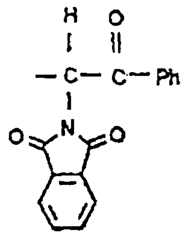

**7.** Verfahren gemäß irgend einem der vorausgegangenen Ansprüche, **dadurch gekennzeichnet, dass** bei der Polymerisation eine Verbindung der Formel (IA) verwendet wird.

**8.** Verfahren gemäß dem vorausgegangenen Anspruch, **dadurch gekennzeichnet, dass** die Verbindung der Formel (IA) gewählt ist aus a-(Oheptafluorbutylxanthyl)ethylpropionat ($R^1 = CHCH_3(CO_2Et)$, $R^2 = CH_2CF_2CF_2CF_3$), a-(O-trifluorethylxantyl)ethylpropionat ($R^1 = CHCH_3(CO_2Et)$, $R^2 = CH_2CF_3$) und a-(O-tridecaftuoroctanylxanthyl)ethylpropio-nat ($R^1 = CHCH_3(CO_2Et)$, $R^2 = CH_2CH_2C_6F_{13}$).

**9.** Verfahren gemäß irgend einem der vorausgegangenen Ansprüche, **dadurch gekennzeichnet, dass** das ethylenisch ungesättigte Monomer gewählt ist aus: Styrol oder seinen Derivaten, Butadien, Chloropren, Methacrylestern und den Vinylnitrilen.

**10.** Verfahren gemäß irgend einem der vorausgegangenen Ansprüche, **dadurch gekennzeichnet, dass** das ethylenisch ungesättigte Monomer aus den Vinylestern der Carbonsäure gewählt ist.

**11.** Verfahren gemäß irgend einem der vorausgegangenen Ansprüche, **dadurch gekennzeichnet, dass** das ethylenisch ungesättigte Monomer aus Vinylacetat und Vinylpropionat gewählt ist.

**12.** Polymer, welches geeignet ist, durch ein Verfahren erhalten zu werden, das darin besteht, ein ethylenisch ungesättigtes Monomer, eine Quelle von freien Radikalen und eine Verbindung der Formel (IA), (IB) oder (IC) in Kontakt zu bringen.

**13.** Polymer gemäß dem vorausgegangenen Anspruch, **dadurch gekennzeichnet, dass** dieses einen Polydispersionsindex von höchstens 2, vorzugsweise von höchstens 1,5 aufweist.

**14.** Verfahren zur Herstellung von Multiblock-Polymeren, **dadurch gekennzeichnet, dass** wenigstens einmal die Anwendung des Verfahrens gemäß einem der Ansprüche 1 bis 10 wiederholt wird, indem verwendet wird:

- Verschiedene Monomere der vorausgegangenen Anwendung, und

- anstelle der Vorläuferverbindung der Formel (IA), (IB) oder (IC) die Blockpolymere, die aus der vorausgegangenen Anwendung hervorgegangen sind.

**15.** Blockpolymer, welches geeignet ist, durch ein Verfahren gemäß dem vorausgegangenen Anspruch erhalten zu werden.

**16.** Blockpolymer gemäß dem vorausgegangenen Anspruch, **dadurch gekennzeichnet, dass** dieses einen Polydispersionsindex von höchstens 2, vorzugsweise von höchstens 1,5 aufweist.

**17.** Blockpolymer gemäß Anspruch 12 oder 13, **dadurch gekennzeichnet, dass** dieses wenigstens zwei Polymerblöcke aufweist, die aus den folgenden Assoziationen gewählt sind:

- Polystyrol/Methylpolyacrylat,
- Polystyrol/Ehylpolyacrylat,
- Polystyrol/Tert-Butylpolyacrylat,
- Ethylpolyacrylat/Vinylpolyacetat,
- Butylpolyacrylat/Vinylpolyacetat,
- Tert-Butylpolyacrylat/Vinylpolyacetat.

## Claims

**1.** Process for preparing polymers, **characterized by** bringing into contact:

- at least one ethylenically unsaturated monomer,
- at least one source of free radicals, and
- at least one compound of general formula (IA), (IB), or (IC):

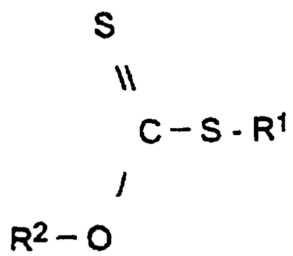

(IA)

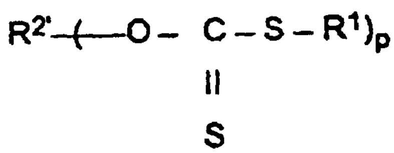

(IB)

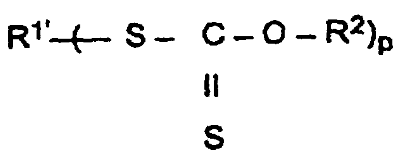

(IC)

in which:

- **$R^2$** and **$R^{2'}$** represent:

  - an alkyl, acyl, aryl, alkene, or alkyne group (i), or
  - a carbocyclic system (ii), saturated or unsaturated, optionally aromatic, or
  - a heterocyclic system (iii), saturated or unsaturated,

  these groups and cyclic systems (i), (ii), and (iii) being substituted by at least one fluorine atom, chlorine atom, and/or bromine atom,
- **$R^1$** and **$R^{1'}$** represent:

  - an alkyl, acyl, aryl, alkene, or alkyne group (i), optionally substituted, or
  - a carbocyclic system (ii), saturated or unsaturated, optionally substituted or aromatic, or
  - a heterocyclic system (iii), saturated or unsaturated, optionally substituted,
    where these groups and cyclic systems (i), (ii) and (iii) may be substituted by substituted phenyl groups, substituted aromatic groups, or: alkoxycarbonyl or aryloxycarbonyl (-COOR), carboxy (-COOH), acyloxy ($-O_2CR$), carbamoyl ($-CONR_2$), cyano (-CN), alkylcarbonyl, alkylarylcarbonyl, arylcarbonyl, arylalkylcarbonyl, phthalimido, maleimido, succinimido, amidino, guanidimo, hydroxyl (-OH), amino ($-NR_2$), halogen, allyl, epoxy, alkoxy (-OR), S-alkyl, or S-aryl groups, groups having hydrophilic or ionic character, for example the alkali metal salts of carboxylic acids, the alkali metal salts of a sulphonic acid, polyalkylene oxide chains (PEO, PPO), or cationic substituents (quaternary

ammonium salts),
R representing an alkyl or aryl group, or
- a polymer chain,

- **p** is between 2 and 10,
- the compound of general formula IA being other than a compound in which $R^2$ is a pentafluorophenyl group and $R^1$ is a benzyl group.

**2.** Process according to the preceding claim, **characterized in that** $R^2$ and $R^{2'}$ are substituted by at least one fluorine atom.

**3.** Process according to any one of the preceding claims, **characterized in that** $R^2$ represents a group of formula: $-CH_2R'^5$, in which $R'^5$ represents an alkyl group substituted by at least one fluorine atom, chlorine atom, and/or bromine atom.

**4.** Process according to the preceding claim, **characterized in that** $R^2$ is selected among the following groups:

- $CH_2CF_3$,
- $CH_2CF_2CF_2CF_3$
- $CH_2CH_2C_6F_{13}$.

**5.** Process according to any one of the preceding claims, **characterized in that** $R^1$ represents:

- a group of formula $CR'^1R'^2R'^3$, in which:
  - $R'^1$ $R'^2$ and $R'^3$ represent the groups (i), (ii), or (iii) as defined above, or
  - $R'^1 = R'^2 = H$ and $R'^3$ is an aryl, alkene, or alkyne group,
- or a $-COR'^4$ group in which $R'^4$ represents a group (i), (ii), or (iii).

**6.** Process according to the preceding claim, **characterized in that** $R^1$ is selected among the groups:

- $CH(CH_3)$ $(CO_2Et)$
- $CH(CH_3)$ $(C_6H_5)$
- $CH(CO_2Et)_2$
- $C(CH_3)$ $(CO_2Et)$ $(S\text{-}C_6H_5)$
- $C(CH_3)_2(C_6H_5)$

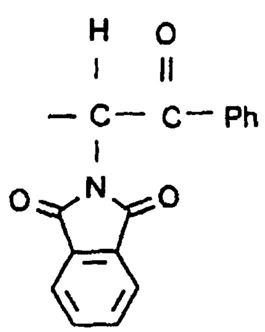

**7.** Process according to any one of the preceding claims, **characterized in that** the polymerization uses a compound of formula (IA).

**8.** Process according to the preceding claim, **characterized in that** the compound of formula(IA) is selected among ethyl a-(O-heptafluorobutylxanthyl)-propionate ($R^1 = CHCH_3(CO_2Et)$, $R^2 = CH_2CF_2CF_2CF_3$), ethyl a-(O-trifluoroethylxanthyl)propionate ($R^1 = CHCH_3(CO_2Et)$, $R^2 = CH_2CF_3$), and ethyl a-(O-tridecafluorooctanylxanthyl)propionate ($R^1 = CHCH_3(CO_2Et)$, $R^2 = CH_2CH_2C_6F_{13}$).

**9.** Process according to any one of the preceding claims, **characterized in that** the ethylenically unsaturated monomer is selected among: styrene or its derivatives, butadiene, chloroprene, (meth)acrylic esters, and vinyl nitriles.

**10.** Process according to any one of the preceding claims, **characterized in that** the ethylenically unsaturated monomer is selected among vinyl esters of a carboxylic acid.

**11.** Process according to any one of the preceding claims, **characterized in that** the ethylenically unsaturated monomer is selected among vinyl acetate and vinyl propionate.

**12.** Polymer obtainable by the process which consists in bringing an ethylenically unsaturated monomer into contact with a source of free radicals and a compound of formula (IA), (IB), or (IC) .

**13.** Polymer according to the preceding claim, **characterized in that** it has a polydispersity index of at most 2, preferably of at most 1.5.

**14.** Process for preparing multiblock polymers, **characterized in that** the implementation of the process according to one of claims 1 to 10 is repeated at least once, using:

- compared with the preceding implementation, different monomers, and
- instead of the precursor compound of formula (IA), (IB), or (IC), the block polymer from the preceding implementation.

**15.** Block polymer obtainable by the process according to the preceding claim.

**16.** Block polymer according to the preceding claim, **characterized in that** it has an index of polydispersity of at most 2, preferably of at most 1.5.

**17.** Block polymer according to claim 12 or 13, **characterized in that** it has at least two polymer blocks selected among the following partners:

- polystyrene/polymethyl acrylate
- polystyrene/polyethyl acrylate,
- polystyrene/polytert-butyl acrylate,
- polyethyl acrylate/polyvinyl acetate,
- polybutyl acrylate/polyvinyl acetate
- polytert-butyl acrylate/polyvinyl acetate.

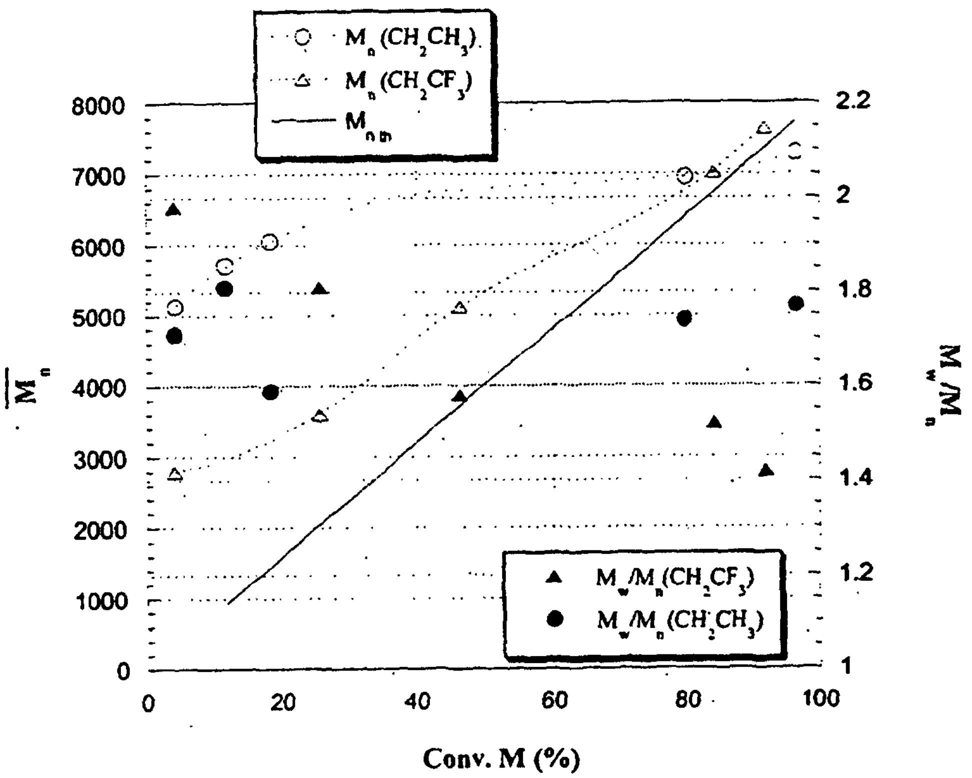

$M_n$ ($CH_2CH_3$)
$M_n$ ($CH_2CF_3$)
$M_{n\,th}$
$M_w/M_n$ ($CH_2CF_3$)
$M_w/M_n$ ($CH_2CH_3$)
$\overline{M_n}$
$M_w/M_n$
8000
7000
6000
5000
4000
3000
2000
1000
0
2.2
2
1.8
1.6
1.4
1.2
1
0
20
40
60
80
100
Conv. M (%)


Figure 1

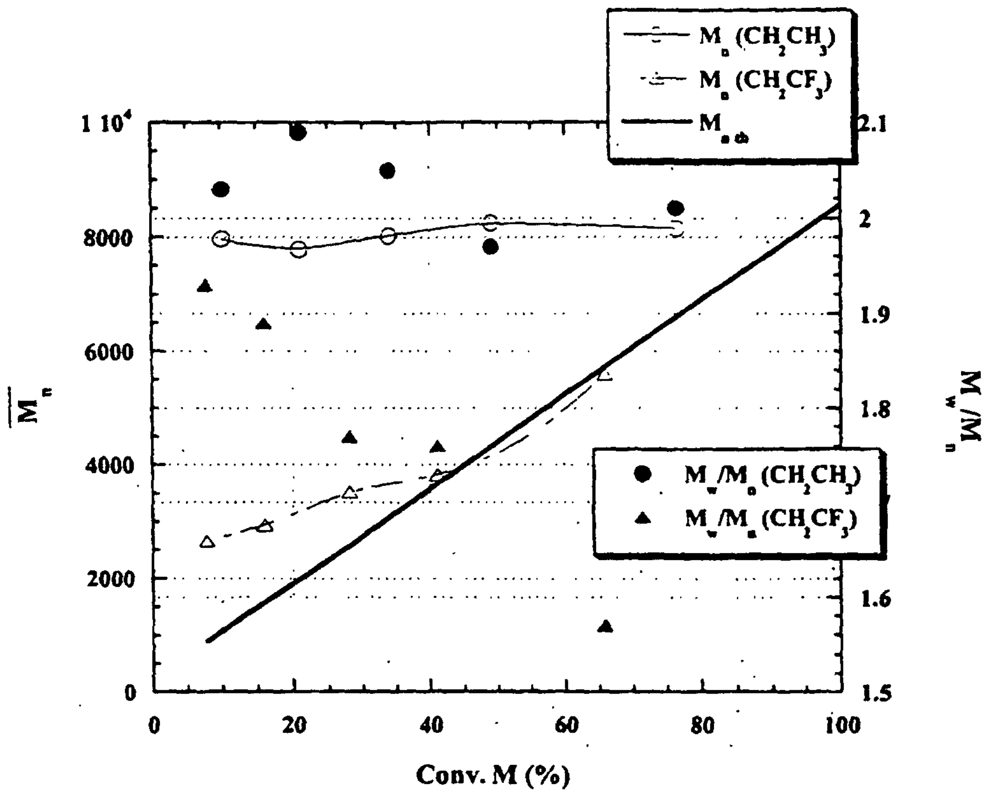

M_n (CH2CH3)
M_n (CH2CF3)
M_n th
M_w/M_n (CH2CH3)
M_w/M_n (CH2CF3)
1 10^4
8000
6000
4000
2000
0
2.1
2
1.9
1.8
1.6
1.5
0
20
40
60
80
100
Conv. M (%)
M_n
M_w/M_n


Figure 2